# EUROPÄISCHE PATENTSCHRIFT

(11) **EP 4 133 919 B1**
(45) Veröffentlichungstag und Bekanntmachung des Hinweises auf die Patenterteilung: **28.01.2026**
(21) Anmeldenummer: 22168351.9
(22) Anmeldetag: 14.04.2022
(51) Int. Cl.: A01B 59/00, A01B 63/112, A01B 71/02, G06F 21/12, G06Q 50/02

(54) **LANDWIRTSCHAFTLICHE MASCHINE MIT VERÄNDERBAREM FUNKTIONSUMFANG**
AGRICULTURAL MACHINE WITH CHANGEABLE FUNCTIONALITY
MACHINE AGRICOLE À FONCTIONNALITÉ CHANGEABLE

(30) Priorität: 13.08.2021 DE 102021121126
(43) Veröffentlichungstag der Anmeldung: 15.02.2023
(73) Patentinhaber: CLAAS Tractor SAS, 78141 Vélizy-Villacoublay Cedex (FR)
(72) Erfinder: Reinhardt, Alexander, 33332 Gütersloh (DE); Besand, Christian, 33739 Bielefeld (DE)
(74) Vertreter: CLAAS Gruppe

(56) Entgegenhaltungen:
- EP-A1- 3 757 934
- EP-A1- 3 907 965
- EP-B1- 3 216 659
- DE-A1- 102019 125 353
- US-A1- 2019 085 785

## Beschreibung

Landwirtschaftliche Maschinen, deren Funktionsumfang durch Austausch von Komponenten wie etwa Anbauwerkzeugen verändert werden kann, sind seit alters her bekannt. Mit zunehmender Digitalisierung auf dem Gebiet der Landtechnik ist auch die Möglichkeit hinzugekommen, den Funktionsumfang einer landwirtschaftlichen Maschine durch Aufspielen von neuer Software oder Freischalten von vorhandener, aber nicht a priori nutzbarer Software zu erweitern, ohne dass dafür bauliche Veränderungen an der Maschine vorgenommen werden müssen. So offenbart etwa EP 3 216 659 B1 eine landwirtschaftliche Maschine, bei der Funktionen wie etwa eine automatisierte Lenkung, Synchronisierung von Position und Weg mehrerer landwirtschaftlicher Maschinen, Zugriff auf Dokumentation freischaltbar sind.

Eine landwirtschaftliche Maschine, bei der die für solche Zusatzfunktionen und deren Freischaltung benötigten Einrichtungen eingebaut sind, ist naturgemäß teurer als eine, der diese Einrichtungen fehlen. Das liegt offensichtlich an den Kosten dieser Einrichtungen selber, zum anderen aber auch an dem erhöhten logistischen Aufwand, den der Hersteller der Maschine treiben muss, um Modelle der Maschine mit und ohne Freischaltungsmöglichkeit zu fertigen.

Dieser logistische Aufwand ließe sich einsparen, wenn der Hersteller die benötigten Einrichtungen in sämtlichen Maschinen einer Serie einbaut, unabhängig davon, ob der Käufer der Maschine diese bestellt hat oder nicht, und diese in dem Fall, dass sie nicht bestellt worden sind, einfach ungenutzt lässt. Für den Hersteller ist es jedoch nicht wünschenswert, in großem Umfang Maschinen zu einem günstigen Preis auf den Markt zu bringen, die durch eine einfache Softwareergänzung befähigt werden können, Sonderfunktionen mit hohem Mehrwert zu erbringen; die Motivation für unberechtigte Dritte, solche Softwareergänzungen durch Aufspielen von Schwarzkopien vorzunehmen, wäre zu hoch.

Landwirtschaftliche Maschinen und Verfahren zum Betreiben von landwirtschaftlichen Maschinen sind aus den Druckschriften EP 3 216 659 B1, US 2019/085785 A1, EP 3 757 934 A1 und EP 3 907 965 A1 (Stand der Technik nach Artikel 54(3) EPÜ) bekannt.

Eine Aufgabe der vorliegenden Erfindung ist daher, eine landwirtschaftliche Maschine zu schaffen, die einerseits mit minimalem logistischem Aufwand in Varianten mit unterschiedlichem Funktionsumfang bereitgestellt werden kann und deren Funktionsumfang nachträglich von einem Berechtigten bequem und sicher erweitert werden kann.

Dieses Ziel wird erreicht, indem bei einer landwirtschaftlichen Maschine nach dem Anspruch 1 mit einem mechanischen Aggregat, einer Steuereinheit zum Einstellen mindestens eines Betriebsparameters des mechanischen Aggregats, wobei die Steuereinheit einen ersten und einen zweiten Betriebszustand des mechanischen Aggregats unterstützt, und einer Datenquelle zum Ausgeben wenigstens einer Steuergröße an die Steuereinheit, wobei ein Zusammenhang zwischen dem Wert der Steuergröße und einem von der Steuereinheit eingestellten Wert des Betriebsparameters im ersten Betriebszustand ein anderer ist als im zweiten Betriebszustand, ein von der Steuereinheit für den Betrieb im zweiten Betriebszustand benötigtes Programm in einem Speicher der Maschine in einer zugriffsgesicherten Form vorliegt, wobei die Maschine derart ausgestattet ist, dass eine Ausführung des Programms durch die Steuereinheit nur bei Vorliegen einer Berechtigung ermöglicht wird. Erfindungsgemäß ist die Überprüfung der Berechtigung durch eine unaufgeforderte Eingabe in eine Benutzerschnittstelle der Maschine auslösbar.

Eine Möglichkeit zum Laden eines neuen, nicht ab Fertigung der Maschine vorhandenen Steuerprogramms in den Speicher, die von einem Unberechtigten zum Aufspielen von nicht lizenzierten Programmen missbraucht werden könnte, braucht daher nicht vorgesehen zu werden.

Dass bei gegebenen Werten aller Parameter des Satzes der von der Steuereinheit eingestellte Wert des Betriebsparameters im ersten Betriebszustand ein anderer ist als im zweiten Betriebszustand kann daher rühren, dass im ersten Betriebszustand der Wert des Betriebsparameters von einem von der Datenquelle ausgegebenen Wert der Steuergröße unabhängig ist, etwa weil die Datenquelle im ersten Betriebszustand außer Betrieb ist und keine Daten liefert, oder weil von ihr gelieferte Daten von der Steuereinheit nicht verarbeitet werden. Denkbar ist aber auch, dass Daten der Datenquelle in beiden Betriebszuständen den von der Steuereinheit eingestellten Wert des Betriebsparameters beeinflussen, allerdings in unterschiedlicher Weise. Insbesondere kann die Auflösung, mit der die Datenquelle die Steuergröße ausgibt, je nach Betriebszustand unterschiedlich sein. So kann etwa im ersten Betriebszustand nur eine binäre Unterscheidung zwischen Aus- und Einschaltzustand oder zwischen Unter- und Überschreitung eines Grenzwerts der Steuergröße vorgesehen sein, während im zweiten Betriebszustand kontinuierlich variable Werte der Steuergröße zur Verfügung stehen und von der Steuereinheit ausgewertet werden.

Um eine sachgerechte Einstellung des Betriebsparameters auch im ersten Betriebszustand zu ermöglichen, kann eine Benutzerschnittstelle vorgesehen sein, an der der Wert des Betriebsparameters im ersten Betriebszustand von einem Benutzer manuell einstellbar ist. D.h. während der Betriebsparameter im zweiten Betriebszustand automatisch und unter Berücksichtigung der von der Datenquelle ausgegebenen Steuergröße geregelt wird, obliegt im ersten Betriebszustand die Regelung dem Benutzer.

Bei dem mechanischen Aggregat kann es sich insbesondere um ein austauschbares Anbaugerät der landwirtschaftlichen Maschine handeln. Hier ermöglicht das Vorhandensein des Steuerprogramms im Speicher der Maschine eine sofortige Inbetriebnahme eines nachträglich hinzugekauften Anbaugeräts ohne vorherige Programminstallation. Es kann sich aber auch um ein Dreschwerk oder ein Reinigungsaggregat eines Mähdreschers oder ein Häckselwerk eines Feldhäckslers handeln.

Wenn etwa das austauschbare Anbaugerät ein Bodenbearbeitungswerkzeug wie etwa ein Pflug ist, können Einstellungen wie Eindringtiefe, Vorderfurche, Zugpunkt und Zuglinie im ersten Betriebszustand der manuellen Einstellung durch einen Benutzer überlassen bleiben, während sie im zweiten Betriebszustand unter Ausnutzung aller über den Sensor und/oder die Datenschnittstelle verfügbaren Informationen von der Steuereinheit optimiert und ggf. anhand von im Laufe eines Arbeitseinsatzes gewonnener Informationen laufend angepasst werden können.

Als Datenquelle kommen insbesondere ein Sensor oder eine - insbesondere schnurlose - Datenschnittstelle in Betracht. Diese Datenquellen können jeweils im Betrieb fortlaufend objektive Werte der Steuergröße liefern, anhand derer im zweiten Betriebszustand die Steuereinheit den Betriebsparameter einstellt, wohingegen es im ersten Betriebszustand dem Benutzer überlassen bleibt, den Betriebsparameter einzustellen.

Wenn eine solche Datenquelle in alle Maschinen einer Serie eingebaut wird, unabhängig davon, ob der von einem Besteller der Maschine geforderte Funktionsumfang deren Einbau notwendig macht oder nicht, dann gleicht die dadurch erzielte logistische Vereinfachung einen Teil der Kosten der Datenquelle aus. Auch wenn später nur bei einem Teil dieser Maschinen die durch die Datenquelle ermöglichte Funktion nachträglich aktiviert und das dafür benötigte Steuerprogramm kostenpflichtig lizenziert wird, kann das den Einbau der Komponente in alle Maschinen der Serie wirtschaftlich sinnvoll machen.

Die zur Nutzung der für den zweiten Betriebszustand benötigte Berechtigung kann gegen Zahlung einer Gebühr einrichtbar sein. Insbesondere kann eine Steuereinheit der Maschine eingerichtet sein, die Berechtigung durch Speichern eines von außen empfangenen Schlüssels einzurichten. Ein Dialog, in dessen Verlauf die Zahlung online abgewickelt wird, kann von derselben Steuereinheit mit einem Benutzer der Maschine geführt werden.

Wenn die Überprüfung ergibt, dass eine Berechtigung zur Nutzung des zweiten Betriebszustandes nicht vorhanden ist, kann die Steuereinheit eingerichtet sein, einen Benutzerdialog zum Erwerb der Berechtigung über eine Benutzerschnittstelle der Maschine zu führen. Dies ist besonders zweckmäßig im Falle einer zeitweiligen Berechtigung, die auf diese Weise exakt für den Zeitraum erworben werden kann, in dem Bedarf nach ihr besteht.

Um den Benutzer nicht mit wiederholten Nachfragen nach dem Erwerb einer Berechtigung zu behelligen, sollte der Benutzerdialog nur dann angezeigt werden, wenn tatsächlich Bedarf danach besteht. Dies kann dadurch erreicht werden, dass die Überprüfung der Berechtigung nur durch eine unaufgeforderte Eingabe in eine Benutzerschnittstelle der Maschine auslösbar ist. So kann nur derjenige den zweiten Betriebszustand tatsächlich herbeiführen, der weiß, wie die unaufgeforderte Eingabe vorzunehmen ist. Dies muss nicht zwangsläufig der Benutzer der Maschine selber sein. Um Missbrauchsversuchen vorzubeugen, kann es sinnvoll sein, den Kreis der Personen, die um die unaufgeforderte Eingabe wissen, klein zu halten und z.B. auf den Hersteller der Maschine und seine Vertragshändler zu begrenzen.

Da das für den für den Betrieb im zweiten Betriebszustand benötigte Programm im Speicher der Maschine von vornherein hinterlegt ist, kann die Nutzung des zweiten Betriebszustandes im Bedarfsfall mit minimalem Aufwand an Zeit und Datenverkehr, unabhängig von der Verfügbarkeit einer schnellen Datenverbindung freigeschaltet werden. Z.B. kann die Berechtigung noch während eines Feldeinsatzes erworben werden, wenn sich dies zur Bewältigung einer unvorhergesehenen Aufgabe als notwendig erweist.

Ein Verfahren nach Anspruch 10 zum Betreiben einer landwirtschaftlichen Maschine umfasst die Schritte
- Bereitstellen eines ersten Steuerprogramms für einen ersten Betriebsmodus und eines zweiten Betriebsprogramms für einen zweiten Betriebsmodus der Maschine in einem Speicher der Maschine,
- Überprüfen, ob eine Berechtigung zur Nutzung des zweiten Betriebszustands vorliegt, wobei die Überprüfung der Berechtigung durch eine unaufgeforderte Eingabe in eine Benutzerschnittstelle der Maschine ausgelöst wird, und
- Aktivieren des zweiten Betriebszustandes nur, wenn das Ergebnis der Überprüfung ist, dass die Berechtigung vorliegt.

Wenn die Überprüfung ergibt, dass eine Berechtigung zur Nutzung des zweiten Betriebszustandes nicht vorhanden ist, umfasst das Verfahren vorzugsweise als weiteren Schritt das Anbieten des Erwerbs einer Berechtigung. Dieses Anbieten kann insbesondere durch Anzeigen von Informationen auf der Benutzerschnittstelle der Maschine erfolgen.

Voraussetzung dafür, dass ein externer Computer die Berechtigung an die Maschine übermittelt, kann der Empfang einer Zahlungsinformation durch den externen Computer sein.

Der Empfang der Zahlungsinformation kann unabhängig von dem auf der Benutzerschnittstelle der Maschine geführten Benutzerdialog erfolgen, z.B. indem ein Händler eine Kennung einer von ihm erworbenen Maschine hochlädt und für die zu dieser Maschine erworbenen Lizenzen einen Abbuchungsauftrag erteilt, oder indem dem Anbieter der Lizenzen eine Abbuchungserlaubnis bereits vor dem Hochladen der Kennung erteilt worden ist.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung einer landwirtschaftlichen Maschine und von mit ihr im Rahmen des erfindungsgemäßen Verfahrens kommunizierenden Komponenten;
- Fig. 2: einen Speicher der Maschine und darin gespeicherte Steuerprogramme;
- Fig. 3: ein Flussdiagramm des Verfahrens; und
- Fig. 4: ein alternatives Flussdiagramm.

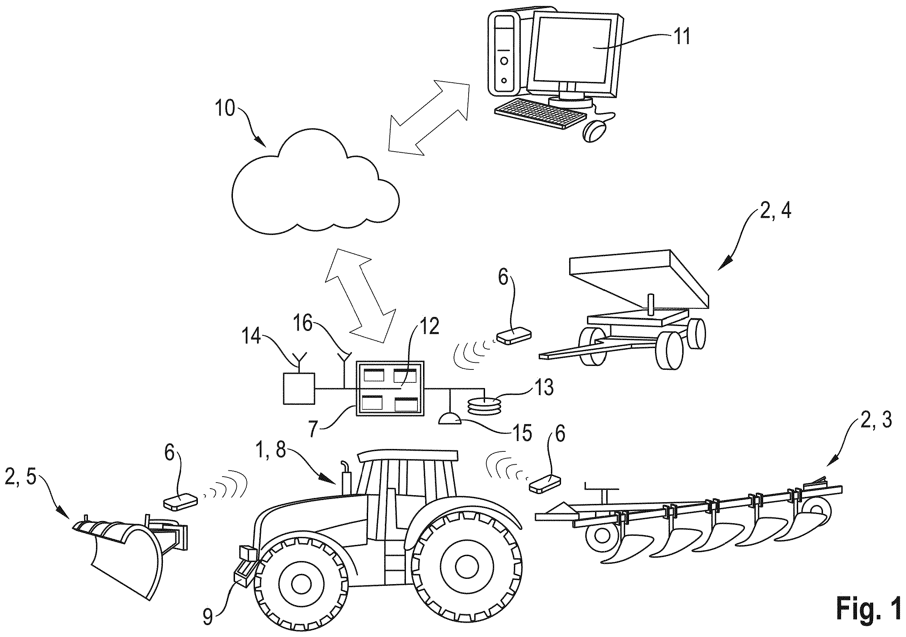

Fig. 1 zeigt als Beispiel einer landwirtschaftlichen Maschine 1 einen Traktor 8; die Übertragung der nachfolgend erläuterten Prinzipien der Erfindung auf andere Typen von landwirtschaftlichen Maschinen wie etwa Mähdrescher, Feldhäcksler etc. wird dem Fachmann keine Probleme bereiten.

Die Maschine 1 verfügt über diverse mechanische Aggregate 2. Einige von diesen sind Anbaugeräte, die hinten oder vorn an der landwirtschaftlichen Maschine 1 montierbar sind, als Beispiele sind ein Pflug 3, ein Anhänger 4 und ein Räumschild 5 gezeigt. Jedes dieser Anbaugeräte umfasst eine - hier jeweils abgesetzt von dem Anbaugerät und vergrößert dargestellte - Elektronikeinheit 6, die vorgesehen ist, um, wenn das betreffende Anbaugerät an der Maschine 1 montiert ist, mit einem - hier als Tablet-Computer ebenfalls abgesetzt und vergrößert dargestellten - Bordrechner 7 der Maschine 1 zu kommunizieren und eine Kennung des Anbaugeräts an den Bordrechner 7 zu übermitteln. Dies ermöglicht es dem Bordrechner 7, das Anbaugerät zu identifizieren, ein dem identifizierten Anbaugerät zugeordnetes Steuerprogramm aus einer auf der Maschine 1 lokal gespeicherten Programmbibliothek auszuwählen und auf seinem Bildschirm ein an das identifizierte Anbaugerät angepasstes Steuermenu anzuzeigen. Der Bildschirm und ein Eingabeinstrument bilden so eine Benutzerschnittstelle 12, über die der Benutzer Betriebszustände der Maschine 1 bzw. ihrer Aggregate 2 auswählen kann. Im Falle des Tablet-Computers ist der Bildschirm in bekannter Weise berührungsempfindlich, um auch als das Eingabeinstrument dienen zu können.

Die Elektronikeinheit 6 kann auch vorgesehen sein, um Steuerinformation vom Bordrechner 7 zu empfangen und Stellglieder, Motoren o.dgl. des Anbaugeräts gemäß dieser Steuerinformation zu steuern.

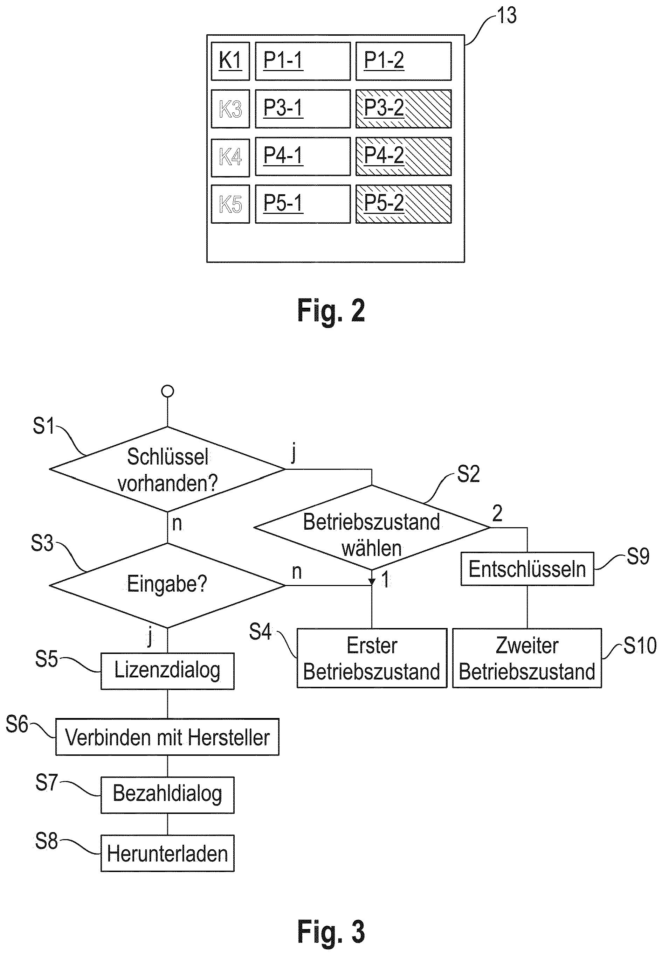

So kann etwa der Pflug 3 mit Stellgliedern ausgestattet sein, die es erlauben, als Betriebsparameter einen oder mehrere von Eindringtiefe, Vorderfurche, Zugpunkt und Zuglinie einzustellen. Ein erstes in einem Speicher 13 des Bordrechners 7 gespeichertes, dem Pflug 3 zugeordnetes Steuerprogramm P3-1 (siehe Fig. 2) zeigt auf dem Bildschirm des Bordrechners 7 einen Benutzerdialog, der Sollwerte der betreffenden Parameter vom Benutzer abfragt, und steuert in einem ersten Betriebsmodus des Pflugs die Stellglieder entsprechend den Eingaben des Benutzers an. Ein zweites, ebenfalls dem Pflug 3 zugeordnetes Steuerprogramm P3-2 steuert die Stellglieder des Pflugs 3 automatisch anhand von Daten zur Bodenbeschaffenheit. Diese können von einem Sensor 15 an Bord der Maschine 1 in Echtzeit ermittelt werden; denkbar ist auch, dass die Maschine 1 ein Navigationssystem 14 mitführt, um jederzeit ihre Position bestimmen zu können, und die Daten zur Bodenbeschaffenheit anhand der Position aus einer Datenbank im Speicher 13 oder, über eine Funkschnittstelle 16, von einem externen Speicher abfragt.

Ein erstes dem Anhänger 4 zugeordnetes Steuerprogramm P4-1 kann sich darauf beschränken, einen Betriebszustand wie Stillstand, Auf- oder Abwärtsbewegung eines Hubzylinders, der eine Kippbewegung der Ladefläche des Anhängers 4 antreibt, dem Benutzer zur Auswahl anzubieten und den vom Benutzer ausgewählten Zustand am Hubzylinder einzustellen, während ein zweites Steuerprogramm P4-2 darüber hinaus die Möglichkeit bieten kann, die Geschwindigkeit quantitativ zu steuern oder Sonderfunktionen wie etwa ein Rütteln der Ladefläche zu steuern.

Ein erstes Steuerprogramm P5-1 des Räumschildes 5 fragt eine gewünschte Höhe des Räumschildes 5 über dem Boden ab und steuert anhand dieser Vorgabe ein Stellglied, das Teil des Räumschildes 5 selber sein kann oder in den Traktor 8 integriert sein kann, um die Position einer Kupplung 9 zu verstellen, die vorgesehen ist, um daran das Räumschild 5 zu montieren. Ein zweites Steuerprogramm P5-2 kann diese Höhe automatisch regeln, um einen Bodenkontakt des Räumschildes 5 zu vermeiden, und dazu Daten eines Sensors 15 wie etwa eines Tachometers oder eines Beschleunigungssensors, der durch Bodenunebenheit verursachte Vertikalbeschleunigungen der Maschine 1 misst, nutzen.

Weitere Steuerprogramme können dem Fahrantrieb der Maschine 1 zugeordnet sein; ein erstes Steuerprogramm P1-1 unterstützt manuelles Fahren, bei dem die Fahrgeschwindigkeit in herkömmlicher Weise vom Benutzer über Gaspedal und Bremse und die Fahrtrichtung über ein Lenkrad gesteuert werden, während ein zweites Steuerprogramm P1-2, z.B. für den Betrieb als Begleitfahrzeug in einem Erntevorgang, Fahrgeschwindigkeit und -richtung der Maschine 1 anhand von per Funk über die Schnittstelle 16 empfangenen Bewegungsdaten einer Erntemaschine so steuert, dass ein von der Maschine 1 gezogener Anhänger 4 jederzeit korrekt platziert ist, um von der Erntemaschine 1 ausgeworfenes Erntegut aufzufangen.

Ein Benutzer hat, wenn er die Maschine 1 beim Hersteller erwirbt, die Wahl zwischen einer einfachen, preiswerten Ausführung und einer aufwendigeren und dementsprechend teureren Ausführung.

In der aufwendigeren Ausführung sind die zweiten Programme P1-2, P3-2, P4-2, P5-2 frei nutzbar. In der einfachen Ausführung sind sie zwar im Speicher hinterlegt, aber einige von ihnen oder alle sind nicht nutzbar. Dadurch ist der Funktionsumfang der Maschine 1 in der einfachen Ausführung eingeschränkt; deshalb wird sie kostengünstig angeboten. Um die Nutzung der zweiten Programme P1-2, P3-2, P4-2, P5-2 bei dieser Maschine 1 zu unterbinden, können die zweiten Programme P1-2, P3-2, P4-2, P5-2 in einem passwortgesicherten Bereich des Speichers 13 oder in verschlüsselter Form, in Fig. 2 durch eine Schraffur symbolisiert, hinterlegt sein.

Wie in Fig. 3 gezeigt, überprüft (S1) bei einem Start der Maschine 1 der Bordrechner 7 für jedes zweite Programm P1-2, P3-2, P4-2, P5-2, ob ein Schlüssel zugreifbar ist, der den Zugriff auf den Speicherbereich oder das Entschlüsseln dieses Programms ermöglicht. Um zugreifbar zu sein, kann der Schlüssel im Speicher 13 des Bordrechners 7 oder in einem externen Speicher, mit dem sich der Bordrechner 7 beim Start der Maschine 1 verbindet, gespeichert sein, wie in Fig. 2 für den Schlüssel K1 des Programms P1-2 gezeigt. Speicherplätze für Schlüssel K3-K5 zu den Programmen P3-2, P4-2, P5-2 sind nicht belegt. Ein solcher externer Speicher kann z.B. ein Transponder oder ein mobiles Datenendgerät, typischerweise ein Smartphone sein, den/das der Benutzer mit sich trägt, und der/das, wenn der Benutzer in eine Fahrerkabine der Maschine 1 einsteigt, in Kommunikationsreichweite des Bordrechners 7 gelangt.

Wenn ein Schlüssel zu einem zweiten Programm zugreifbar ist, bietet der Bordrechner 7 dem Benutzer in Schritt S2 an, unter einem ersten Betriebszustand, in dem das erste Programm verwendet wird, und einem zweiten Betriebszustand, in dem das zweite verwendet wird, zu wählen.

Wenn kein Schlüssel zugreifbar ist, wie in Fig. 2 für die Programme P3-2, P4-2, P5-2 der Fall, prüft der Bordrechner 7 in Schritt S3, ob eine unaufgeforderte Eingabe des Benutzers vorliegt, d.h. ob dieser eine bestimmte Eingabe vorgenommen hat, ohne dass der Bordrechner 7 in irgendeiner Weise signalisiert hätte, dass diese erwartet wird. Beispielsweise kann eine gleichzeitige Betätigung einer vorgegebenen Mehrzahl von Bedienelementen der Maschine 1 oder die Betätigung eines oder mehrerer Bedienelemente während eines festgelegten Zeitfensters nach einem Start der Maschine 1 als ein solcher Befehl interpretiert werden; alternativ kann der Bordrechner 7 programmiert sein, einen berührungslos, etwa per NFC oder Bluetooth lesbaren Datenträger in seiner Umgebung zu erfassen, auszulesen und das Vorfinden eines bestimmten - von dem oben erwähnten Schlüssel verschiedenen - Passworts unter den gelesenen Daten als die unaufgeforderte Eingabe zu interpretieren. Ein solcher Datenträger kann vom Hersteller der Maschine 1 einem begrenzten Kreis von Personen zur Verfügung gestellt werden, um es diesen Personen zu ermöglichen, die Benutzung eines der zweiten Programme freizuschalten.

Der Benutzer, der die Maschine 1 in der einfachen Ausführung gekauft hat, wird die unaufgeforderte Eingabe nicht vornehmen. Zum einen hat der Hersteller keine Veranlassung, ihn auf die Möglichkeit dazu hinzuweisen, zum anderen würde ihm, selbst wenn er diese - egal ob zufällig oder mit Absicht - vornähme, der zum Freischalten der zweiten Programme benötigte Datenträger fehlen. Wenn die Eingabe nicht vorgenommen wird, also bei jedem normalen Start der Maschine 1, verzweigt das Verfahren zu Schritt S4, in dem dem Benutzer ermöglicht wird, jeweils die ersten Steuerprogramme P1-1, P3-1, P4-1, P5-1 sowie eventuell bereits freigeschaltete zweite Steuerprogramme, hier das Steuerprogramm P1-2 zu nutzen. D.h. er kann die Maschine 1 im Programm P1-1 manuell lenken oder sie im Programm P1-2 autonom neben einer Erntemaschine fahren lassen, und wenn der Pflug 3 montiert ist, kann er dessen Stellglieder im Programm P3-1 manuell steuern. Er kann jedoch nicht die Stellglieder des Pflugs automatisch nachregeln lassen, denn dies ist nur mit dem entsprechenden zweiten Steuerprogramm P3-2 möglich.

Dieser Benutzer kann die Maschine 1 weiterverkaufen, z.B. indem er sie bei einem Vertragshändler des Herstellers in Zahlung gibt. Der Vertragshändler kann den Weiterverkaufswert der Maschine 1 erhöhen, indem er die Nutzung der zweiten Steuerprogramme P3-2, P4-2, P5-2 freischaltet. Der Händler verfügt über die Kenntnisse oder technischen Hilfsmittel, die nötig sind, um die unaufgeforderte Eingabe vorzunehmen, so dass das Verfahren den Schritt S5 erreicht.

In einer ersten Ausgestaltung des Verfahrens zeigt der Bordrechner 7 in Schritt S5 auf seinem Bildschirm 12 einen Dialog an, in dessen Verlauf der Händler die Möglichkeit erhält, diejenigen zweiten Programme auszuwählen, die für die vom Zweitbenutzer gewünschten Funktionen benötigt werden.

Der Bordrechner 7 baut, z.B. über Internet, Mobilfunk oder ein Telematiksystem 10, eine Verbindung zu einem Computer 11 des Herstellers auf (S6), um Kosten der benötigten Lizenzen abfragen und anzeigen zu können.

Wenn der Händler die Auswahl der benötigten zweiten Programme abgeschlossen hat, dann wird im Laufe eines Bezahldialogs S7 die Bezahlung der erworbenen Lizenzen an den Hersteller abgewickelt,

Nach erfolgreichem Abschluss des Bezahldialogs S7 wird zu jedem in diesem Dialog lizenzierten zweiten Programm ein Schlüssel K3, K4 oder K5 vom Computer 11 an den Bordrechner 7 heruntergeladen (S8), der letzterem die Nutzung des zweiten Programms, z.B. durch Entschlüsseln des Programmtexts, ermöglicht. Der Schlüssel kann seinerseits codiert übermittelt werden, z.B. indem eine individuelle Kennung der Maschine 1 vom Bordrechner 7 an den Computer 11 übermittelt wird, und von diesem ein codierter Schlüssel so erstellt wird, dass erst eine daran von Bordrechner 7 vorgenommene Verknüpfung mit der Kennung den eigentlichen Schlüssel ergibt. So ist sichergestellt, dass der übertragene Schlüssel, auch wenn er abgehört wird, nicht zum Freischalten von Programmen auf einer anderen Maschine verwendet werden kann.

Wenn bei einem erneuten Start der Maschine 1 das Verfahren wiederholt wird, ergibt die Prüfung des Schritts S1, dass der benötigte Schlüssel K3, K4 oder K5 in dem Speicher 13 des Bordrechners 7 vorhanden ist. In diesem Fall verzweigt das Verfahren zu Schritt S2, um dem Benutzer die Wahl zwischen dem ersten und dem zweiten Betriebszustand zu ermöglichen. Entscheidet er sich für den zweiten, dann wird das entsprechende zweite Programm mittels des in S8 heruntergeladenen Schlüssels K3, K4 oder K5 entschlüsselt und in Schritt S10 ausgeführt.

Einer bevorzugten Ausgestaltung der Erfindung zufolge stellt der zweite Betriebszustand (bzw. das zweite Steuerprogramm) Sonderfunktionen für die Steuerung eines Anbaugeräts 3, 4 oder 5 oder eines anderen Aggregats wie etwa der Lenkung der Maschine 1 zur Verfügung, die im ersten Betriebszustand nicht nutzbar sind, zum Beispiel automatische Optimierungen im Rahmen des CEMOS-Systems der Anmelderin. Dieses System ermöglicht z.B. eine selbsttätige Optimierung der oben erwähnten Betriebsparameter des Pflugs 3 anhand der Ausgaben von Sensoren 15, die am Pflug 3 oder an der Maschine 1 eingebaut sind, um z.B. Bodeneigenschaften zu erfassen, oder anhand von Daten, die über eine Datenschnittstelle von einer Quelle außerhalb der Maschine 1, z.B. über die Funkschnittstelle 16 von dem Telematiksystem 10, empfangen werden.

Wenn die Maschine 1 ein Mähdrescher oder Feldhäcksler ist, umfassen die CEMOS-Funktionen jeweils die automatische Steuerung von Betriebsparametern eines in Maschine eingebauten, nicht wie der Pflug an- und abkoppelbaren Aggregats wie etwa des Dreschwerks und/oder der ihm nachgeschalteten Reinigungsaggregate bzw. des Häckselwerks anhand der Ausgaben von an der Maschine 1 eingebauten, z.B. den Erntegutdurchsatz und/oder, im Falle des Mähdreschers, den Kornverlust überwachenden Sensoren. Diese Betriebsparameter können bei einem Mähdrescher insbesondere die Dreschtrommeldrehzahl, die Reinigungsgebläsedrehzahl, die Dreschkorbweite oder die Fahrgeschwindigkeit sein. Die ersten Programme unterstützen jeweils nur die Einstellung dieser Betriebsparameter auf vom Benutzer eingestellte Sollwerte, während die zweiten Programme die Betriebsparameter selbsttätig anhand der jeweiligen Messwerte der Sensoren optimieren.

Wenn der Benutzer meint, eine solche automatische Optimierung nicht zu benötigen, dann kann er beim Kauf der Maschine 1 darauf verzichten, eine Lizenz für deren CEMOS-Funktionen zu erwerben. Die für diese Funktionen benötigten Sensoren 15, sind dennoch in der Maschine 1 oder ggf. dem Pflug 3 eingebaut. Die zweiten Programme P3-2, P4-2, P5-2, die die Messwerte der Sensoren 15 nutzen, sind in der Programmbibliothek gespeichert, so dass ihre Freischaltung zu einem späteren Zeitpunkt, insbesondere durch einen Käufer der gebrauchten Maschine 1, möglich bleibt.

Einer zweckmäßigen Abwandlung des Verfahrens zufolge können die Schritte S5 und S7 zwischen einem Computer des Händlers und dem Computer 11 des Herstellers vorab ohne Beteiligung des Bordrechners 7 ausgeführt werden. Dies ermöglicht es dem Händler, die Kosten der von einem Kaufinteressenten benötigten zusätzlichen Lizenzen beim Hersteller abzufragen und dabei die Kennung der Maschine 1 und die Information über die benötigten Lizenzen auf dem Computer 11 zu hinterlegen. Wenn das Angebot angenommen wird, muss er an der Maschine 1 lediglich noch die Eingabe des Schritts S3 vornehmen, um den Bordrechner zu veranlassen, seinerseits die Verbindung zum Computer 11 aufzubauen (S6) und den Schlüssel herunterzuladen (S8). Erst wenn der Schlüssel heruntergeladen wird, werden die Lizenzen dem Händler berechnet.

Von den verschiedenen hier beschriebenen zweiten Betriebszuständen können mehrere oder alle in einer gleichen Maschine realisierbar sein; die Lizenzen für die Nutzung des jeden von ihnen zugeordneten Steuerprogramms P3-2, P4-2, P5-2 können einzeln oder im Paket erworben werden.

Die oben beschriebenen Verfahren eröffnen dem Zweitbenutzer der Maschine die Möglichkeit zur Nutzung von Funktionen, die der erste Benutzer nie verwendet hat. Da der Zweitbenutzer somit dieselbe Freiheit hat, die Fähigkeiten der Maschine an seine Bedürfnisse anzupassen wie der erste sie hatte, besteht eine hohe Wahrscheinlichkeit, dass die Maschine schnell und zu einem guten Preis weiterverkauft werden kann.

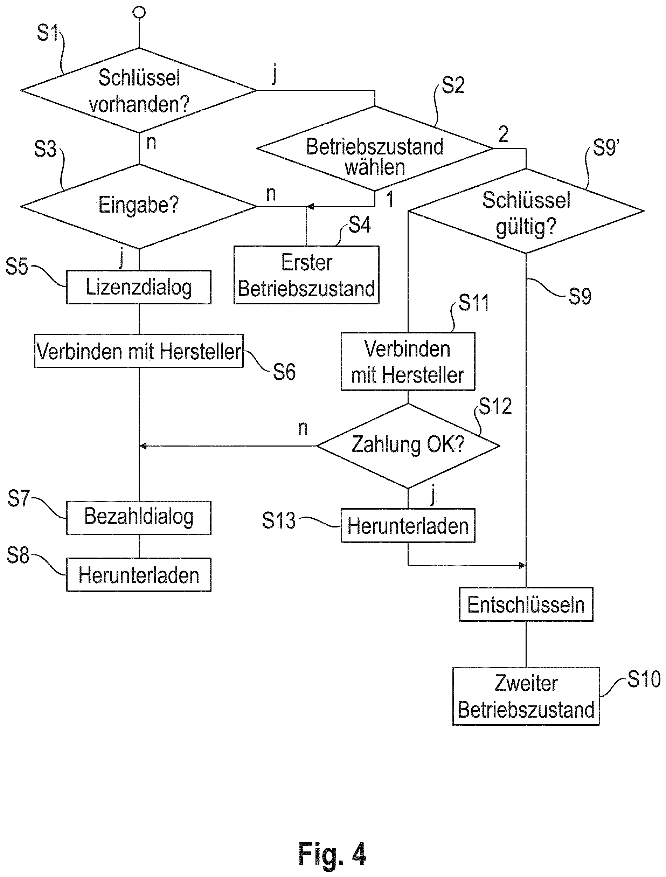

Lizenzen für die zweiten Steuerprogramme P3-2, P4-2, P5-2 können nicht nur per Kauf auf unbegrenzte Zeit vergeben werden, sondern auch gegen wiederkehrende Zahlung oder für einen begrenzten Zeitraum. Ein Verfahren hierfür ist in Fig. 4 dargestellt. Schritte, die denen von Fig. 3 entsprechen, sind in Fig. 4 gleich bezeichnet und werden nicht erneut beschrieben. Für dieses Verfahren ist es sinnvoll, wenn auch der Benutzer selber in der Lage ist, eine Lizenz zu erwerben, und über die in Schritt S3 vorzunehmende Eingabe informiert ist, so dass er sie vornehmen kann. Wenn der Benutzer im Lizenzdialog eine wiederkehrende Zahlung oder eine begrenzte Laufzeit der Lizenz vereinbart, erhält er in Schritt S8 einen Schlüssel von zeitlich begrenzter Gültigkeit, und der Schritt des Entschlüsselns S9 wird nur durchgeführt, wenn eine vorgeschaltete Prüfung S9' die Gültigkeit des Schlüssels ergeben hat. Ist die Gültigkeit des Schlüssels hingegen abgelaufen, dann wird eine Verbindung zum Computer 11 aufgebaut (S11), um von dort einen neuen Schlüssel zu beziehen. Der Computer 11 prüft anhand der zu ihm übertragenen Kennung der Maschine 1, ob zu dieser Maschine 1 eine für eine Erneuerung des Schlüssels erforderliche Lizenzzahlung eingegangen ist (S12). Wenn ja, wird der neue Schlüssel an den Bordrechner 7 heruntergeladen (S13), so dass das Steuerprogramm wieder entschlüsselt (S9) und der zweite Betriebszustand eingenommen werden kann (S10). Fehlt es an einer Zahlung, dann verzweigt das Verfahren zu Schritt S7, so dass die Lizenz neu erworben werden kann.

### Bezugszeichen

- 1: Landwirtschaftliche Maschine
- 2: mechanisches Aggregat
- 3: Pflug
- 4: Anhänger
- 5: Räumschild
- 6: Elektronikeinheit
- 7: Bordrechner
- 8: Traktor
- 9: Kupplung
- 10: Telematiksystem
- 11: Computer
- 12: Benutzerschnittstelle
- 13: Sensor
- 14: Navigationssystem
- 15: Sensor
- 16: Funkschnittstelle

## Patentansprüche

1. Landwirtschaftliche Maschine (1) mit einem mechanischen Aggregat (2), einer Steuereinheit (7) zum Einstellen mindestens eines Betriebsparameters des mechanischen Aggregats (2), wobei die Steuereinheit (7) einen ersten und einen zweiten Betriebszustand des mechanischen Aggregats (2) unterstützt, und einer Datenquelle zum Ausgeben wenigstens einer Steuergröße an die Steuereinheit, wobei ein Zusammenhang zwischen dem Wert der Steuergröße und einem von der Steuereinheit eingestellten Wert des Betriebsparameters im ersten Betriebszustand ein anderer ist als im zweiten Betriebszustand, wobei ein von der Steuereinheit (7) für den Betrieb im zweiten Betriebszustand benötigtes Programm in einem Speicher der Maschine in einer zugriffsgesicherten Form vorliegt, wobei die Maschine derart ausgestattet ist, dass eine Ausführung des Programms durch die Steuereinheit nur bei Vorliegen einer Berechtigung ermöglicht wird, **dadurch gekennzeichnet, dass** die Überprüfung der Berechtigung durch eine unaufgeforderte Eingabe in eine Benutzerschnittstelle (12) der Maschine (1) auslösbar ist.

2. Landwirtschaftliche Maschine (1) nach Anspruch 1, **dadurch gekennzeichnet, dass** die Unterschiedlichkeit der im ersten und im zweiten Betriebszustand von der Steuereinheit eingestellten Werte des Betriebsparameters daher rührt, dass im ersten Betriebszustand der Wert des Betriebsparameters von einem von der Datenquelle ausgegebenen Wert der Steuergröße unabhängig ist.

3. Landwirtschaftliche Maschine (1) nach Anspruch 1, **gekennzeichnet durch** eine Benutzerschnittstelle, an der der Wert des Betriebsparameters im ersten Betriebszustand von einem Benutzer manuell einstellbar ist.

4. Landwirtschaftliche Maschine (1) nach Anspruch 1, 2 oder 3, **dadurch gekennzeichnet, dass** das mechanische Aggregat ein austauschbares Anbaugerät, ein Dreschwerk, ein Reinigungsaggregat oder ein Häckselwerk ist.

5. Landwirtschaftliche Maschine (1) nach einem der vorhergehenden Ansprüche, **dadurch gekennzeichnet, dass** die Datenquelle einen Sensor oder eine insbesondere schnurlose Datenschnittstelle umfasst.

6. Landwirtschaftliche Maschine (1) nach einem der vorhergehenden Ansprüche, **dadurch gekennzeichnet, dass** die Berechtigung gegen Gebührenzahlung einrichtbar ist.

7. Landwirtschaftliche Maschine (1) nach einem der vorhergehenden Ansprüche, **dadurch gekennzeichnet, dass** die Berechtigung ein zum Entschlüsseln des Programms in der zugriffsgesicherten Form benötigter Schlüssel ist.

8. Landwirtschaftliche Maschine (1) nach Anspruch 7, **gekennzeichnet durch** eine Datenschnittstelle, über die der Schlüssel von einer externen Quelle beziehbar ist.

9. Landwirtschaftliche Maschine nach einem der vorhergehenden Ansprüche, **dadurch gekennzeichnet, dass** die Steuereinheit (7) eingerichtet ist, einen Benutzerdialog (S8, S9) zum Erwerb einer Berechtigung über eine Benutzerschnittstelle (12) der Maschine (1) zu führen.

10. Verfahren zum Betreiben der landwirtschaftlichen Maschine (1) nach einem der Ansprüche 1 bis 9 mit den Schritten:
- Bereitstellen eines ersten Steuerprogramms für einen ersten Betriebsmodus und eines zweiten Betriebsprogramms für einen zweiten Betriebsmodus der Maschine (1) in einem Speicher der Maschine,
- Überprüfen (S1), ob eine Berechtigung zur Nutzung des zweiten Betriebszustands vorliegt, wobei die Überprüfung der Berechtigung durch eine unaufgeforderte Eingabe in eine Benutzerschnittstelle (12) der Maschine (1) ausgelöst wird, und
- Aktivieren (S10) des zweiten Betriebszustandes nur, wenn das Ergebnis der Überprüfung (S1) ist, dass die Berechtigung vorliegt.

11. Verfahren nach Anspruch 10, ferner mit dem Schritt
- Anbieten des Erwerbs der Berechtigung (S5, S7), wenn das Ergebnis der Überprüfung (S1) ist, dass die Berechtigung nicht vorliegt.

12. Verfahren nach Anspruch 10 oder 11, ferner mit dem Schritt
- Empfangen (S8) der Berechtigung von einem externen Computer (11) nach Empfang einer Zahlungsinformation (S7, S12) durch diesen.

## Claims

1. An agricultural machine (1) with a mechanical assembly (2), a control unit (7) for adjusting at least one operating parameter of the mechanical assembly (2), wherein the control unit (7) supports a first and a second operating state of the mechanical assembly (2), and with a data source for outputting at least one control variable to the control unit, wherein a relationship between the value of the control variable and a value of the operating parameter which is set by the control unit is different in the first operating state than in the second operating state, wherein a program required by the control unit (7) for the operation in the second operating state is present in a memory of the machine in an access-protected form, wherein the machine is configured in a manner such that an execution of the program by the control unit is only made possible when an authorisation is present, **characterized in that** the verification of the authorisation can be triggered by an unsolicited input into a user interface (12) of the machine (1).

2. The agricultural machine (1) according to claim 1, **characterized in that** the difference in the values of the operating parameter set by the control unit in the first and in the second operating state is due to the fact that in the first operating state, the value of the operating parameter is independent of a value of the control variable which is output by the data source.

3. The agricultural machine (1) according to claim 1, **characterized by** a user interface on which the value of the operating parameter in the first operating state can be manually adjusted by a user.

4. The agricultural machine (1) according to claim 1, claim 2 or claim 3, **characterized in that** the mechanical assembly is an interchangeable attachment, a threshing assembly, a cleaning assembly or a chopping assembly.

5. The agricultural machine (1) according to one of the preceding claims, **characterized in that** the data source comprises a sensor or a wireless data interface, in particular a wireless data interface.

6. The agricultural machine (1) according to one of the preceding claims, **characterized in that** the authorisation can be set up upon payment of fees.

7. The agricultural machine (1) according to one of the preceding claims, **characterized in that** the authorisation is a key which is required in order to decrypt the program in the access-protected form.

8. The agricultural machine (1) according to claim 7, **characterized by** a data interface, via which the key can be obtained from an external source.

9. The agricultural machine according to one of the preceding claims, **characterized in that** the control unit (7) is configured to conduct a user dialog (S8, S9) in order to purchase an authorisation via a user interface (12) of the machine (1).

10. A method for operating the agricultural machine (1) according to one of claims 1 to 9, with the steps of:
- providing a first control program for a first operating mode and a second operating program for a second operating mode of the machine (1) in a memory of the machine,
- verifying (S1) whether an authorisation to use the second operating state is present, wherein the verification of the authorisation is triggered by an unsolicited input into a user interface (12) of the machine (1), and
- activating (S10) the second operating state only if the result of the verification (S1) is that the authorisation is present.

11. The method according to claim 10, further comprising the step of:
- offering the purchase of the authorisation (S5, S7) if the result of the verification (S1) is that the authorisation is not present.

12. The method according to claim 10 or claim 11, further comprising the step of:
- receiving (S8) the authorisation from an external computer (11) after the receipt of payment information (S7, S12) from it.

## Revendications

1. Machine agricole (1) comprenant un équipement de travail mécanique (2), une unité de commande (7) destinée à régler au moins un paramètre de fonctionnement de l'équipement de travail mécanique (2), l'unité de commande (7) assistant un premier et un deuxième état de fonctionnement de l'équipement de travail mécanique (2), et comprenant une source de données destinée à délivrer au moins une grandeur de commande à l'unité de commande, sachant qu'un rapport entre la valeur de la grandeur de commande et une valeur du paramètre de fonctionnement réglée par l'unité de commande est différent dans le premier état de fonctionnement de celui du deuxième état de fonctionnement, sachant qu'un programme nécessaire à l'unité de commande (7) pour le fonctionnement dans le deuxième état de fonctionnement est présent dans une mémoire de la machine, sous une forme à accès protégé, la machine étant équipée de manière à ce qu'une exécution du programme par l'unité de commande ne soit possible qu'en présence d'une autorisation, **caractérisée en ce que** la vérification de l'autorisation peut être déclenchée par une saisie non requise dans une interface utilisateur (12) de la machine (1).

2. Machine agricole (1) selon la revendication 1, **caractérisée en ce que** la différence des valeurs du paramètre de fonctionnement réglées par l'unité de commande dans le premier et le deuxième état de fonctionnement est due au fait que dans le premier état de fonctionnement, la valeur du paramètre de fonctionnement est indépendante d'une valeur de la grandeur de commande délivrée par la source de données.

3. Machine agricole (1) selon la revendication 1, **caractérisée en ce qu'**elle comporte une interface utilisateur sur laquelle la valeur du paramètre de fonctionnement peut être réglée manuellement par un utilisateur, dans le premier état de fonctionnement.

4. Machine agricole (1) selon la revendication 1, 2 ou 3, **caractérisée en ce que** l'équipement de travail mécanique est un outil attelé échangeable, un système de battage, un organe de nettoyage ou un système de hachage.

5. Machine agricole (1) selon une des revendications précédentes, **caractérisée en ce que** la source de données comprend un capteur ou une interface de données, notamment sans fil.

6. Machine agricole (1) selon une des revendications précédentes, **caractérisée en ce que** l'autorisation peut être mise en place contre paiement de frais.

7. Machine agricole (1) selon une des revendications précédentes, **caractérisée en ce que** l'autorisation est une clé qui est nécessaire au décryptage du programme dans la forme à accès protégé.

8. Machine agricole (1) selon la revendication 7, **caractérisée en ce qu'**elle comprend une interface de données par l'intermédiaire de laquelle la clé peut être obtenue depuis une source externe.

9. Machine agricole selon une des revendications précédentes, **caractérisée en ce que** l'unité de commande (7) est conçue pour entretenir un dialogue d'utilisateur (S8, S9) en vue de l'obtention d'une autorisation, par l'intermédiaire d'une interface utilisateur (12) de la machine (1).

10. Procédé pour faire fonctionner la machine agricole (1) selon une des revendications 1 à 9, comprenant les étapes suivantes :
- mise à disposition d'un premier programme de commande pour un premier mode de fonctionnement et d'un deuxième programme d'exploitation pour un deuxième mode de fonctionnement de la machine (1), dans une mémoire de la machine,
- vérification (S1) pour déterminer si une autorisation d'utilisation du deuxième état de fonctionnement est présente, la vérification de l'autorisation étant déclenchée par une saisie non requise dans une interface utilisateur (12) de la machine (1), et
- activation (S10) du deuxième état de fonctionnement, uniquement si le résultat de la vérification (S1) indique que l'autorisation est présente.

11. Procédé selon la revendication 10, comprenant en outre l'étape suivante :
- proposition d'acquérir l'autorisation (S5, S7), si le résultat de la vérification (S1) indique que l'autorisation n'est pas présente.

12. Procédé selon la revendication 10 ou 11, comprenant en outre l'étape suivante :
- réception (S8) de l'autorisation depuis un ordinateur (11) externe, après réception d'une information de paiement (S7, S12) par celui-ci.
